# EUROPEAN PATENT APPLICATION

(11) **EP 4 822 500 A2**
(43) Date of publication of application: **14.10.2026**
(21) Application number: 26193060.6
(22) Date of filing: 24.11.2020
(51) Int. Cl.: G06F 3/042

(54) **A TOUCH-SENSING APPARATUS**

(30) Priority: 25.11.2019 SE 1930383
(62) Document number(s) of the earlier application(s) in accordance with Art. 76 EPC: 24202074.1 / 4 478 165; 20816652.0 / 4 066 089
(71) Applicant: FlatFrog Laboratories AB, 223 63 Lund (SE)
(72) Inventor: Andersson, David, 21175 Malmö (SE); Krus, Mattias, 22647 Lund (SE)
(74) Representative: Invent Horizon IP

(57) **Abstract**

A touch sensing apparatus is disclosed for detecting touch pressure, comprising a panel that defines a touch surface, the panel having a perimeter, a plurality of emitters arranged along the perimeter, wherein the emitters emit light across the panel, a plurality of detectors arranged along the perimeter, whereby the detectors are arranged to receive at least part of said light as detection light, wherein the touch sensing apparatus is configured to determine, as a touch object deflects the panel, a difference in the received detection light between deflection of the panel from a first position to a second position along a normal of the touch surface, and determine a pressure of the touch object against the touch surface based on said difference.

## Description

### Technical Field

The present invention relates generally to the field of touch based interaction systems. More particularly, the present invention relates to a touch sensing apparatus for detecting touch pressure, and a related method.

### Background Art

In one category of touch-sensitive apparatuses a set of optical emitters are arranged around the perimeter of a touch surface of a panel to emit light that is reflected to propagate across the touch surface. A set of light detectors are also arranged around the perimeter of the touch surface to receive light from the set of emitters from the touch surface. I.e. a grid of intersecting light paths are created across the touch surface, also referred to as scanlines. An object that touches the touch surface will attenuate the light on one or more scanlines of the light and cause a change in the light received by one or more of the detectors. The coordinates, shape or area of the object may be determined by analysing the received light at the detectors. In one category of touch-sensitive apparatuses the light is reflected to propagate above the touch surface, i.e. the intersecting light paths extend across the panel above the touch surface. In some applications it is desirable to utilize the pressure of the interaction object, such as a stylus, against the touch surface for controlling the touch interaction. Such control may be desirable both in terms of varying the display of the touch operations on the screen, such as writing or drawing with different shapes of brushes or patterns, and for controlling different operations of a particular touch application. Previous techniques for such touch control typically rely on complex input devices, such as styluses, having various integrated sensors. This increases the complexity and limits the user's choices input devices. This may hinder the development towards highly customizable and intuitive touch systems.

### Summary

An objective is to at least partly overcome one or more of the above identified limitations of the prior art.

One objective is to provide a touch-sensing apparatus which provides for facilitated user interaction and control of touch response, while keeping the cost of the touch interaction system at a minimum.

One or more of these objectives, and other objectives that may appear from the description below, are at least partly achieved by means of touch-sensing apparatuses according to the independent claims, embodiments thereof being defined by the dependent claims.

According to a first aspect a touch sensing apparatus a touch sensing apparatus for detecting touch pressure is provided, comprising a panel that defines a touch surface, the panel having a perimeter, a plurality of emitters arranged along the perimeter, wherein the emitters emit light across the panel, a plurality of detectors arranged along the perimeter, whereby the detectors are arranged to receive at least part of said light as detection light, wherein the touch sensing apparatus is configured to determine a difference in the received detection light between deflection of the panel from a first position (p₁) to a second position (p₂) along a normal of the touch surface when a touch object deflects the panel, and determine a pressure of the touch object against the touch surface based on said difference.

According to a second aspect a method is provided for detecting touch pressure in a touch sensing apparatus comprising a panel that defines a touch surface, the panel having a perimeter, the method comprising emitting light across the panel with a plurality of emitters arranged along the perimeter, receiving at least part of said light as detection light with a plurality of detectors arranged along the perimeter, determining, as a touch object deflects the panel along a normal of the touch surface, a difference in the received detection light between deflection of the panel from a first position (p₁) to a second position (p₂) along the normal, and determining a pressure of the touch object against the touch surface based on said difference.

According to a third aspect a computer program product is provided comprising instructions which, when the program is executed by a computer, cause the computer to carry out the steps of the method according to the second aspect.

Further examples of the invention are defined in the dependent claims, wherein features for the first aspect may be implemented for the second aspect, and vice versa.

Some examples of the disclosure provide for a touch sensing apparatus with a facilitated user input.

Some examples of the disclosure provide for increasing a user's choice of touch input devices.

Some examples of the disclosure provide for improving the touch input from a passive stylus.

Some examples of the disclosure provide for a touch sensitive apparatus in which the modelling of pressure when writing or drawing on the touch surface is improved.

Some examples of the disclosure provide for producing a display of touch response with a more accurate brush-like shape.

Still other objectives, features, aspects and advantages of the present disclosure will appear from the following detailed description, from the attached claims as well as from the drawings.

It should be emphasized that the term "comprises/comprising" when used in this specification is taken to specify the presence of stated features, integers, steps or components but does not preclude the presence or addition of one or more other features, integers, steps, components or groups thereof.

### Brief Description of Drawings

These and other aspects, features and advantages of which examples of the invention are capable of will be apparent and elucidated from the following description of examples of the present invention, reference being made to the accompanying drawings, in which;
Figs. 1a-b are schematic illustrations, in cross-sectional side views, of a touch sensing apparatus and a panel thereof having two different positions with respect to a normal of the touch surface as a touch object applies pressure to the touch surface (Fig. 1b), according to examples of the disclosure;
Figs. 2a-c are schematic illustrations, in cross-sectional side views, of a touch sensing apparatus and a panel thereof, having three different positions with respect to a normal of the touch surface as a touch object applies pressure to the touch surface (Figs. 2b and 2c), according to examples of the disclosure;
Fig. 3 is a schematic illustration, in a top-down view, of a sensing apparatus, and a touch object in contact with a touch surface thereof, according to one example;
Figs. 4a-b show diagrams where a varying force is applied onto the touch surface (4a), and resulting pressure values determined from the deflection of the panel (4b), according to one example; and
Fig. 5 is a flowchart of a method for detecting touch pressure in a touch sensing apparatus

### Detailed Description of Example Embodiments

In the following, embodiments of the present invention will be presented for a specific example of a touch-sensitive apparatus. Throughout the description, the same reference numerals are used to identify corresponding elements.

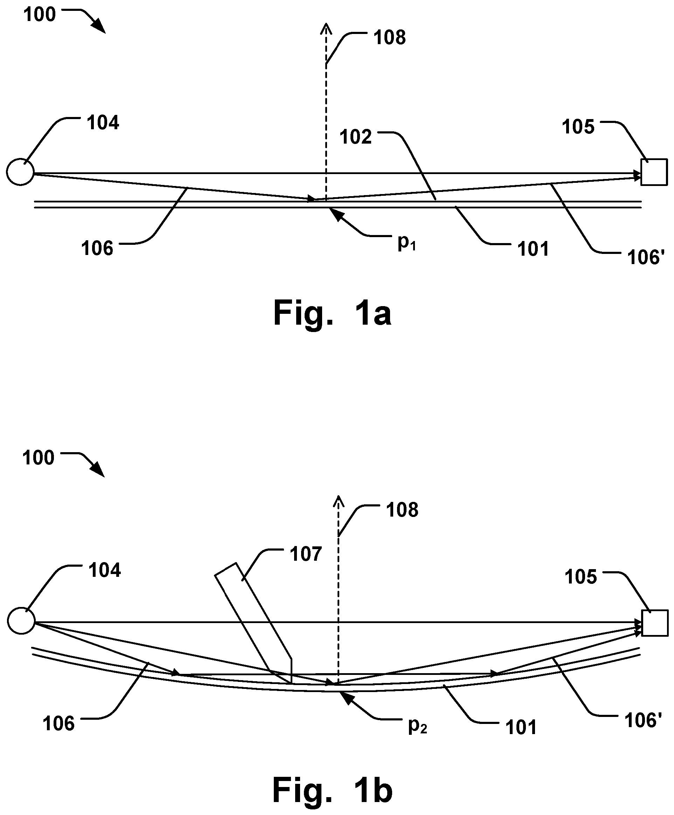

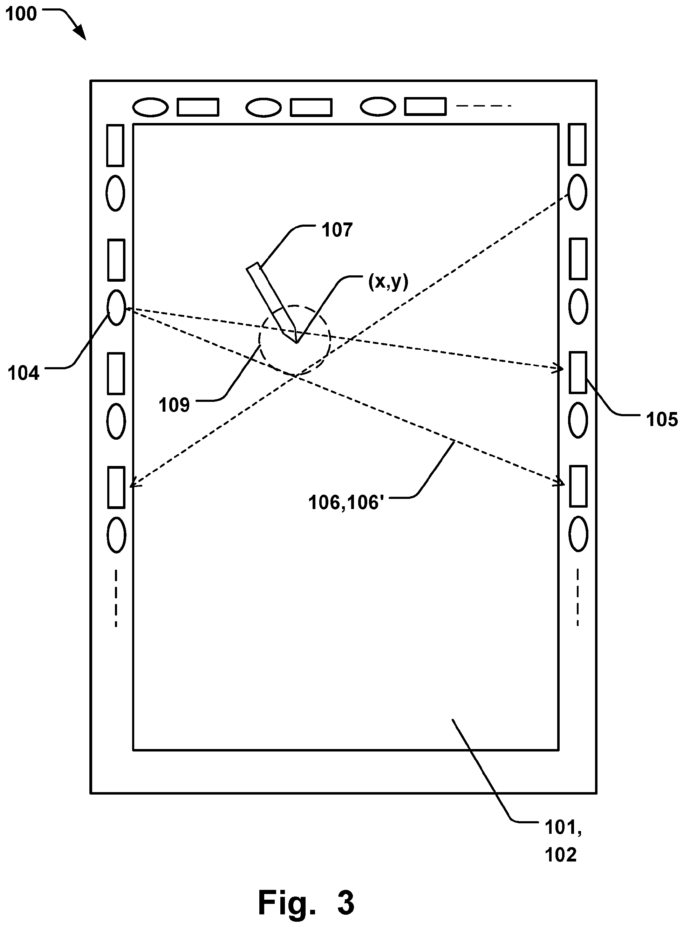

Figs. 1-2 are schematic illustrations, in cross-sectional side-views, of a touch sensing apparatus 100 and a panel 101 thereof having different positions with respect to a normal 108 of a touch surface 102 of the panel 101, whereas Fig. 3 shows a top-down view of a touch sensing apparatus 100. The touch sensing apparatus 100 thus comprises a panel 101 that defines a touch surface 102. The panel 101 may be designed to be overlaid on or integrated into a display device or monitor (not shown). The panel 101 may be made of any solid material (or combination of materials) such as glass, poly(methyl methacrylate) (PMMA) and polycarbonates (PC).

The panel 101 has a perimeter 103. The touch sensing apparatus 100 comprises a plurality of emitters 104 arranged along the perimeter 103, as schematically shown in Fig. 3. The emitters 104 are arranged to emit light 106 across the panel 101. The touch sensing apparatus 100 further comprises a plurality of detectors 105 arranged along the perimeter 103. In use, as the emitters 104 emit light 106, the detectors 105 are arranged to receive at least part of the emitted light as detection light 106'. The schematic side view in Fig. 1a shows the emitted light 106 being reflected against the touch surface 102 as the panel 101 has a first shape or position with respect to a normal 108 of the touch surface 102. Detectors 105 receive at least part of the reflected light, referred to as detection light 106'. Fig. 1b shows a touch interaction object or touch object 107 applying a pressure onto the touch surface 102. The touch object 107 may be a user's hand, a stylus or other object the user utilizes to interact with the touch sensing apparatus 100. The pressure applied by the touch object 107 deflects the panel 101 along the normal 108 of the touch surface 102. The amount of deflection of the panel 101 is exaggerated in the illustration of Fig. 1b for a clearer presentation.

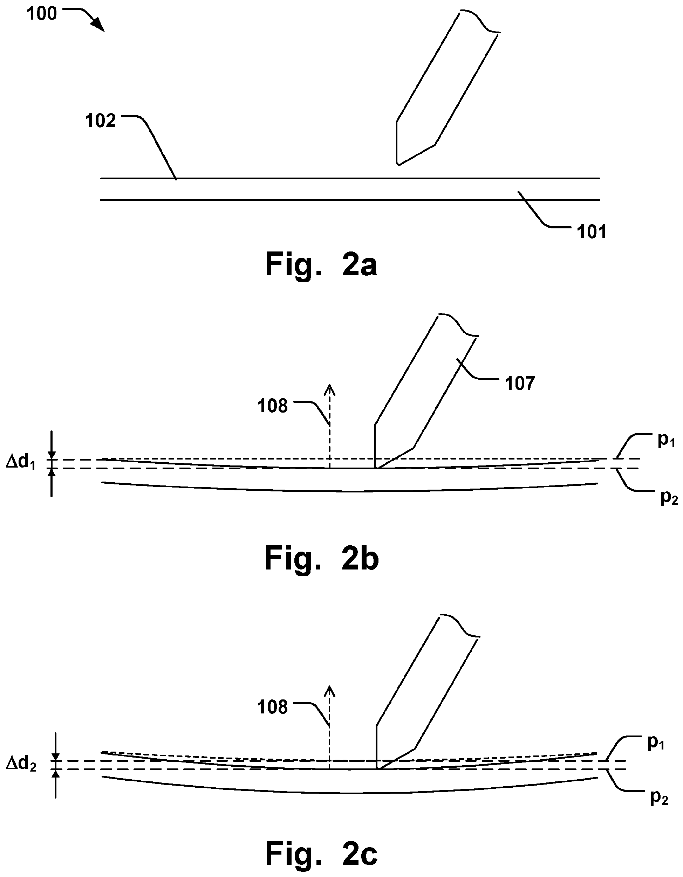

The touch sensing apparatus 100 is configured to determine, as the touch object 107 deflects the panel 101 along the normal 108 of the touch surface 102, a difference in the received detection light 106' between deflection of the panel 101 from a first position (p₁) to a second position (p₂) along the normal 108. The deflection of the panel 101 along the normal 108 will have effect on the number of reflection paths for the emitted light 106 towards the detectors 105. Thus, the amount of received detection light 106' at the detectors 105 will be affected by the deflection, i.e. the curvature of the panel 101 relative the normal 108. For example, the deflection of the panel 101 from the essentially flat shape in Fig. 1a to the curved shape as schematically illustrated in Fig. 1b, as the touch object 107 applies a force and pressure on the panel 101, increases the number of reflection paths on the touch surface 102 towards the detectors 105. The amount of received detection light 106' at the detectors 105 increases as a result. Likewise, the amount of detection light 106' decreases as the number of reflection paths of the light is reduced, i.e. when the curvature of the panel 101 is reduced, such as moving from the curved shape (Fig. 1b) to a less curved, or essentially flat shape (Fig. 1a), relative the normal 108. Thus, the touch sensing apparatus 100 is configured to determine the difference in the received detection light 106' as the panel 101 moves between positions (p₁) and (p₂), e.g. as shown in Figs. 1a-b. As illustrated in Figs. 1a-b the light 106, 106', propagates above the touch surface 102, i.e. the intersecting light paths extend across the panel 101 above the touch surface 102. The variation in the position and number of reflections on the touch surface 102, as the panel 101 moves, as described above, may thus be utilized for detecting differences in the received detection light 106'. Utilizing the reflections paths on the touch surface 102, as opposed to reflection of light inside the panel 101, provides in examples for a more robust and reliable detection of different pressures on the panel 101, as described further below. A more reliable and facilitated detection is provided as complex considerations of how panel deflection would affect light propagation inside the panel 101 may be dispensed with. Instead, utilizing the reflections paths on the touch surface 102 provides for a direct link between the variation in detection light 106' and the changes in curvature of the touch surface 102, as the panel 101 is deflected by applying different pressures. The emitters 104 may thus be arranged to emit light 106 above the touch surface 102, and the amount of deflection of the panel 101 determines an amount and/or direction of reflection of the light 106 on the touch surface 103. A difference in the received detection light 106' can thus be detected as the deflection varies. I.e. the deflection of the panel 101 determines the difference in the received detection light 106'. Figs. 2a-c show another example of the panel 101 being deflected along the direction of the normal 108 as a touch object 107 applies a pressure on the panel 101. Figs. 2a-b show an example similar to the example discussed above in relation to Figs. 1a-b, i.e. the panel 101 is deflected between a first position p₁ (Fig. 2a) where the touch object 107 does not apply a pressure, and a second position p₂ (Fig. 2b). The amount of deflection or relative distance between the first and second positions p₁, p₂, is indicated as Δd₁ in this example.

Figs. 2b-c show an example where the pressure applied by the touch object 107 onto touch surface 102 and panel 101 increases from a first pressure value (Fig. 2b) to a second pressure value (Fig. 2c) being higher than the first pressure value. The first position p₁ indicated in Fig. 2c corresponds to the second position p₂ in Fig. 2b, and the second position p₂ in Fig. 2c corresponds to the additional deflection of the panel 101 along the normal 108 as the pressure is increased further. The amount of deflection or relative distance between the first and second positions p₁, p₂, is indicated as Δd₂ in this example. As described above, the touch sensing apparatus 100 is configured to determine the difference in the received detection light 106' as the panel 101 moves between positions (p₁) and (p₂), e.g. as shown in Figs. 2a-b, and/or as shown in Figs. 2b-c where the pressure on the panel 101 and the associated variation in the amount of deflection of the panel 101 varies, e.g., as a user applies more or less pressure on the touch surface 102 while maintaining contact with the touch surface 102.

The touch sensing apparatus 100 is configured to determine a pressure of the touch object 107 against the touch surface 102 based on the determined difference in received detection light 106'. Thus, based on the increase or decrease in the amount of received detection light 106', the touch sensing apparatus 100 determines the pressure applied onto the panel 101 and the touch surface 102 thereof. For example, as discussed above, detecting an increase in the amount of received detection light 106' at the detectors 105 can be associated with an increased amount of deflection of the panel 101 along the normal direction 108, e.g. an increase in Δd₁ or Δd₂, and an increase in the amount of pressure applied by the touch object 107 on the panel 101. Likewise, detecting a decrease in the amount of received detection light 106' at the detectors 105 can be associated with a decreased amount of deflection of the panel 101 and a decrease in the amount of pressure applied by the touch object 107 on the panel 101. The touch sensing apparatus 100 may thus be configured to control the touch interaction based on the determined variation in pressure. The user may accordingly use any touch object 107 for touch interaction since the pressure onto the touch surface 102 is determined based on the deflection of the panel 101, independently of the type of touch object 107. The user may thus use passive touch objects 107, such as the user's hand, or any passive stylus or brush, without the need of pressure sensors in the touch object 107 itself. This provides for a more intuitive touch interaction and a greater freedom for the user to use individual styluses or brushes.

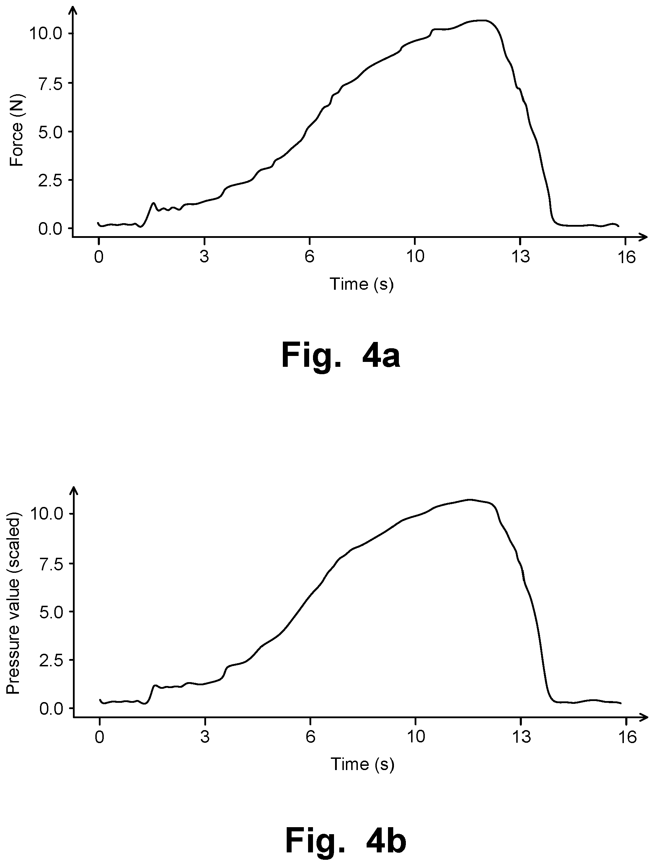

An example is illustrated in Figs. 4a-b, showing diagrams of a varying force being applied onto the touch surface 102 by a touch object (Fig. 4a), and pressure values determined from the resulting deflection of the panel 101 (Fig. 4b). The force applied by the touch object onto the touch surface 102 is measured by a force sensor connected to the touch object. The applied force progressively increases over a time period before being removed from the touch surface 102, as shown in the diagram of Fig. 4a. Pressure values are continuously determined based on detected differences in the received detection light 106' upon deflection of the panel 101 by the applied force, as shown in the diagram of Fig. 4b. The pressure values have been normalized and scaled to the corresponding minimum and maximum force values from the force sensor on the touch object. The calculated pressure or force values follows the force measured by the force sensor closely over time, both in terms of absolute values and the derivative, i.e. the responsiveness over time to the variations of the applied force. An accurate and responsive detection of pressure on the touch surface 102 is provided.

Detecting the pressure as described above provides for a less complex touch sensing apparatus 100. In addition to the mentioned benefits of utilizing passive touch objects 107, there is further no need to implement pressure sensors along the panel 101 itself. Determining the pressure based on the detected difference in the received detection light 106' thus provides for a robust and facilitated control of touch input based on touch pressure while allowing for a less complex and costly touch sensing apparatus 100. A facilitated control and modelling of the touch response is also provided due to the improved pressure detection, e.g. when modelling the influence of the amount of pressure applied when writing or drawing on the touch surface, such as modelling the dynamics and visual touch response of a brush when the pressure on the brush is varied. The touch sensing apparatus 100 may allow producing a display of a virtual brush with a more accurate brush-like shape in such example.

The touch sensing apparatus 100 may accordingly be configured to output a control signal to display a visual output depending on the pressure, such as a shape of a brush which dynamically varies in size, shape and/or direction depending on the amount of pressure applied. The graphical rendering of strokes from a brush or pen may thus be modified depending on the pressure value. Thickness, opacity or other graphical aspect can be modified. Alternatively, or in addition, the touch sensing apparatus 100 may be configured to control the touch sensing apparatus 100 based on the pressure. A user may for example use a "knocking gesture", as a short highpressure interaction gesture, which is distinguished from a softer touch on the touch surface 102 to input a control command. Such gesture can be assigned to functions in the application such as moving elements in and out of the background, (un)pinning or (un)locking elements that was knocked on, trigger a "force" that will move graphical elements towards or away from the knock position, trigging a global effect such as "new document", "close document" or other global command. It is conceivable that various other sequences of pressure values can be assigned a special meaning in different touch applications, such as double-clicking by two rapid increases in pressure allows trigging an event without lifting the pen from the surface.

The touch sensing apparatus 100 may be configured to determine the pressure continuously based on detected differences in the received detection light 106' upon deflection of the panel 101. For example, as illustrated in Figs. 2b-c, and in Figs. 4a-b, the variation in the received detection light 106' may be continuously determined as a user applies a varying pressure onto the touch surface 102, causing the panel 101 to deflect between varying positions along the normal 108. A continuously increase or decrease in the pressure may thus be determined based on the increasing or decreasing amount of received detection light 106'. This provides for an enhanced touch input interaction with the touch sensing apparatus 100.

The touch sensing apparatus 100 may be configured to determine the pressure based on a difference between received detection light 106' upon deflection of the panel 101 and a reference background signal of detection light 106'. For example, the reference background signal can be determined when the panel 101 has the position shown in Fig. 1a or Fig. 2a, when the touch object 107 does not apply a pressure onto the panel 101. As mentioned above in relation to e.g. Figs 2b-c, it is also conceivable that the variation or difference in the detection light 106' is determined for any change in the position of the panel 101 along the normal 108, i.e. for any deflection of the panel 101 as the user interacts with the touch surface 102, to determine an associated variation in the pressure. The touch interaction may then be controlled based on the pressure variation as elucidated above.

The pressure may be determined as being proportional to the aforementioned difference in the detection light 106' being received at the detectors 105. E.g. the pressure may be determined as increasing as the distance Δd₁ or Δd₂ in the example of Figs. 2a-b increases. Vice versa, a decrease in Δd₁ or Δd₂ may be determined as an associated decrease in the pressure, since the curvature of the panel 101 and the number of reflection paths of the light towards the detectors 105 decreases. This provides for a less complex, yet effective and robust estimate of the pressure on the panel 101.

For a given difference in the received detection light 106' between a first emitter and a first detector, the pressure may be determined as inversely proportional to a length (Δed) between the first emitter and the first detector. For example, turning to Fig. 3, the length between the emitter denoted with reference numeral 104 and the detector denoted with reference numeral 105 may be regarded as the aforementioned length Δed. In one example, a difference (v) is detected in the received detection light 106' at detector 105. Considering different lengths (Δed) between the current emitter and detector 104, 105, for a given thickness of the panel 101 along normal 108, it may be determined that for shorter lengths (Δed) the panel 101 deflects less, compared to longer lengths (Δed) for the same pressure. I.e. as the length Δed increases the deflection (Δd₁ or Δd₂) will increase, given a certain pressure at a location (x,y) on the touch surface 102. Thus, for detected difference (v), the associated pressure (P) may be determined as inversely proportional to the length (Δed), i.e. P ∝ 1/Δed. I.e. as Δed increases less pressure is required to deflect the panel 101 a certain distance (Δd₁ or Δd₂). Vice versa, for shorter lengths Δed, a greater pressure is needed to deflect the panel 101 a corresponding distance (Δd₁ or Δd₂). This provides for a robust and effective method to take into account the varying lengths between the different light paths between the emitters and detectors 104, 105, for determining the pressure. The light paths, or scan lines, may be represented by a signal matrix, with the signal levels of the light from each emitter to each detector. A pressure may thus effectively be determined for each signal level or light path. Accordingly, the pressure may be determined as inversely proportional to each of the associated lengths (Δed) between the emitters and detector pairs in the signal matrix. The estimated pressure may be determined as a mean value of such individual pressure values.

For a given difference in the received detection light 106', between a first emitter 104 and a first detector 105, the pressure (P) may be determined as inversely proportional to the length Δl between a position (x,y) of the touch object 107 on the touch surface 102 and the first emitter 104, or the first detector 105, i.e. P ∝ 1/Δl. For example, if a pressure is applied close to the perimeter 103, i.e. close to the emitter 104 or detector 105 (thus for a short length Δl), the deflection of the panel 101 is less compared to a case where the same pressure would be applied close to the center of the panel 101, i.e. with an increase in the length Δl. Thus, for detected difference (v), the associated pressure may be determined as inversely proportional to the length (Δl). I.e. as Δl increases less pressure is required to deflect the panel 101 a certain distance (Δd₁ or Δd₂). Vice versa, for shorter lengths Δl, a greater pressure is needed to deflect the panel 101 a corresponding distance (Δd₁ or Δd₂). The pressure may be determined as inversely proportional to each of the associated lengths (Δl) between the emitters and detector pairs in the signal matrix.

The pressure may be determined as proportional to the aforementioned difference (v) divided by Δed*Δl; P(k) = v / (Δed*Δl), where k is the number of scanlines. An estimated pressure may be determined as a mean value of the individual pressure values P(k) of the scanlines.

The length Δl may be chosen as the minimum of; the distance between the position (x,y) of the touch object 107 on the touch surface 102 and the first emitter 104, and the distance between said position (x,y) and the first detector 105.

The touch sensing apparatus 100 may be configured to define a region of interest 109 around a position (x,y) of the touch object 107 on the touch surface 102. The region of interest 109 may be a defined area around a currently determined coordinate (x,y) where the touch object 107 contacts the touch surface 102. The coordinate (x,y) may be determined based on the attenuation of the light as the touch object touches the touch surface 102, as described in the introductory part of the present disclosure. The touch sensing apparatus 100 may be configured to determine the aforementioned difference (v) for light passing through the region of interest 109, between respective pairs of emitters 104 and detectors 105. I.e. the difference (v) in the received detection light 106' at the detectors 105, as the touch object 107 applies a pressure on the panel 101, is determined for scanlines passing through the region of interest 109. The touch sensing apparatus 100 may be configured to determine an averaged pressure based on the determined differences (v) for the pairs of emitters and detectors associated with the scanlines passing through the region of interest 109. This provides for a more effective determination of the pressure, as it is not necessary to determine the difference (v) for the entire signal matrix. The amount of deflection of the panel 101 along the normal 108 can be regarded as being largest around the touch coordinate (x,y) where the pressure is applied.

The touch sensing apparatus 100 may be configured to determine a first estimate of a pressure at a touch position (x,y) on the touch surface 102. The touch sensing apparatus 100 may be configured to calculate a detection light signal difference (v') based on the first estimate of the pressure. The touch sensing apparatus 100 may be configured to solve the pressure by iteratively minimizing a differential between a measured value of the difference (v) in the received detection light 106' and the calculated detection light signal difference (v'). I.e. a detection light signal difference (v') is calculated for different candidate pressure values until |v-v'| is minimized and the best candidate for the pressure is obtained. The pressure may be iteratively determined at a plurality of positions (x₁..xₙ,y₁..yₙ) on the touch surface 102, e.g. when a plurality of pressure points is applied on the touch surface 102 by a user's hand or other touch objects 107. The plurality of touch positions (x₁..xₙ,y₁..yₙ) may be determined by the light attenuation as described in the introductory part of the present disclosure. Thus, the associated pressure (p₁..pₙ) at the plurality of touch positions (x₁..xₙ,y₁..yₙ) may be determined iteratively as described above. This determination may be done for each scanline in the signal matrix or for a subset of the scanlines in the region of interest 109. The starting guess for (p₁..pₙ) may be based on the last calculated pressure for the respective positions in a previous frame, for contact points that was present in such previous frame. For new pressure point interactions, a typical pressure value is assigned as starting guess. It should be noted that although reference is made to determining a pressure throughout the disclosure, it should be understood that this is analogous to determining a force, in which case a conversion factor is applied to convert between pressure and force values.

The touch sensing apparatus 100 may be configured to determine a deflection of the panel 101 along the normal 108 resulting from the first estimate of the pressure at the touch position (x,y). The touch sensing apparatus 100 may be configured to calculate the detection light signal difference (v') resulting from such deflection. The deflection resulting from the different candidates of pressure values may be determined by analytical expressions, for given geometries of the panel 101, and/or by FEM-based numerical methods, and/or by empirically by applying known forces to a particular configuration of the touch sensing apparatus 100 and panel 101 and storing the parameters of the resulting model. The corresponding deflection resulting from the pressure estimates may thus be determined, as well as the associated detection light signal difference (v') resulting from corresponding shapes of the panel 101 for these deflection values. The influence of the deflection and shape of the panel 101 on the number of reflection paths of the light 106, 106', towards the detectors 105 and resulting detection light signal difference (v') may be determined by different models, analogous to the above discussion, e.g. by analytical, numerical and/or empirical models. Once the detection light signal difference (v') is calculated, the pressure may be iteratively determined by minimizing |v-v'| as described above.

The touch sensing apparatus 100 may be configured to determine the detection light signal difference (v') based on a plurality of reference detection light signal differences resulting from a respective plurality of reference pressures on the touch surface 102. The reference detection light signal differences may be determined empirically. The best candidates of the associated reference pressures may thus be identified, which minimizes |v-v'|, to obtain the best estimate of the pressure. It is also conceivable that a plurality of reference detection light signal differences and a plurality of reference pressures are utilized in look-up tables to directly identify the best estimate of the pressure based on the currently measured signal difference (v). In one example, the closest comparing look-up tables may be interpolated to obtain the best estimate of the pressure.

The touch sensing apparatus 100 may be configured to determine an amount of deflection of the panel 101 along the normal direction 108 based on the pressure. As mentioned above, the deflection may be determined by analytical, numerical and/or empirical models. The amount of deflection and current shape of the panel 101 may be utilized for optimizing the touch detection, e.g. to improve accuracy and/or resolution of the touch detection, and/or to provide characteristics and diagnostics data of the touch sensing apparatus 100, such as the panel 101 and related components for attaching the panel 101 to frame elements of the touch sensing apparatus 100.

The touch sensing apparatus 100 may be configured to determine a vibration amplitude and/or a vibration frequency of the panel 101 based on a determined variation of the pressure over time. I.e. the deflection of the panel 101 may be a result of mechanical vibrations of the panel 101, which may in turn originate from other components of the touch sensing apparatus 100, and/or from motions in the environment surrounding the touch sensing apparatus 100. The vibration characteristics may be utilized for optimizing the touch detection, e.g. to improve accuracy and/or resolution of the touch detection, and/or to provide characteristics and diagnostics data of the touch sensing apparatus 100. In another example, the panel 101 may be assumed to vibrate with a particular default frequency, such as 10 Hz. If there has not been an interaction on the touch surface 102 recently, the source of the vibration can be assumed to originate from the environment around the touch sensing apparatus 100. Such vibration sources can be the on/off state of machinery nearby, a person walking (low amplitude) or jumping (higher amplitude). The vibration events detected in this way may be detected as "gesture", such as a "jump gesture". For example, in a touch application such as a game application, such "jump gesture" may trigger an in-game event. In another example, vibrations in a stand on which the touch sensing apparatus 100 may be mounted may result in a slower vibration, e.g. in the 1-2 Hz range. For variable height stands, the frequency of the slower stand oscillations can be used to estimate the current height of the stand.

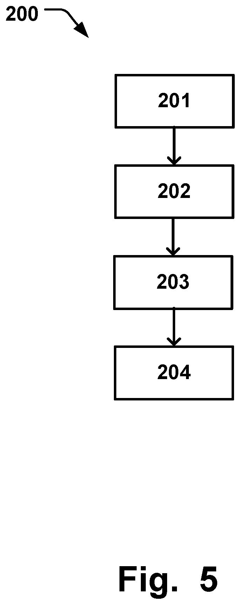

Fig. 5 shows a flowchart of a method 200 for detecting touch pressure in a touch sensing apparatus 100. The touch sensing apparatus 100 comprises a panel 101 that defines a touch surface 102. The panel 101 has a perimeter 103. The method 200 comprises emitting 201 light 106 across the panel 101 with a plurality of emitters 104 arranged along the perimeter 102. The method 200 comprises receiving 202 at least part of said light as detection light 106' with a plurality of detectors 105 arranged along the perimeter 103. The method 200 comprises determining 203, as a touch object 107 deflects the panel 101 along a normal 108 of the touch surface 102, a difference in the received detection light 106' between deflection of the panel 101 from a first position (p₁) to a second position (p₂) along the normal 108. The method 200 comprises determining 204 a pressure of the touch object 107 against the touch surface 102 based on said difference. The method 200 provides for the advantageous benefits as described for the touch sensing apparatus 100 in relation to Figs. 1 - 4 above. The method 200 provides for facilitated user interaction and control of touch response in the touch sensing apparatus 100, while keeping the cost of the touch interaction system at a minimum.

A computer program product is provided comprising instructions which, when the program is executed by a computer, cause the computer to carry out the steps of the method 200 as described above in relation to Fig. 5.

The invention has mainly been described above with reference to a few embodiments. However, as is readily appreciated by a person skilled in the art, other embodiments than the ones disclosed above are equally possible within the scope of the invention, which is defined and limited only by the appended patent claims. For example, the specific arrangement of emitters and detectors as illustrated and discussed in the foregoing is merely given as an example.
Examples:
Example 1. A touch sensing apparatus (100) for detecting touch pressure, comprising
   a panel (101) that defines a touch surface (102), the panel having a perimeter (103),
   a plurality of emitters (104) arranged along the perimeter, wherein the emitters emit light (106) across the panel,
   a plurality of detectors (105) arranged along the perimeter, whereby the detectors are arranged to receive at least part of said light as detection light (106'), wherein the touch sensing apparatus is configured to
   determine a difference in the received detection light between deflection of the panel from a first position (p₁) to a second position (p₂) along a normal (108) of the touch surface when a touch object (107) deflects the panel, and
   determine a pressure of the touch object against the touch surface based on said difference.
Example 2. Touch sensing apparatus according to example 1, wherein the touch sensing apparatus is configured to determine the pressure continuously based on detected differences in the received detection light upon deflection of the panel.
Example 3. Touch sensing apparatus according to example 1 or 2, wherein the touch sensing apparatus is configured to determine the pressure based on a difference between received detection light upon deflection of the panel and a reference background signal of detection light.
Example 4. Touch sensing apparatus according to any of examples 1 - 3, wherein the pressure is determined as being proportional to said difference.
Example 5. Touch sensing apparatus according to any of examples 1 - 4, wherein the pressure, for a given difference in the received detection light between a first emitter and a first detector, is determined as inversely proportional to the length (Δed) between the first emitter and the first detector.
Example 6. Touch sensing apparatus according to any of examples 1 - 5, wherein the pressure, for a given difference in the received detection light between a first emitter and a first detector, is determined as inversely proportional to the length (Δl) between a position (x,y) of the touch object on the touch surface and
   the first emitter, or
   the first detector.
Example 7. Touch sensing apparatus according to example 5 and 6, wherein the pressure is determined as proportional to the difference divided by Δed*Δl.
Example 8. Touch sensing apparatus according to example 7, wherein the length Δl is the minimum of; the distance between the position (x,y) of the touch object on the touch surface and the first emitter, and the distance between said position (x,y) and the first detector.
Example 9. Touch sensing apparatus according to any of examples 1 - 8, wherein the touch sensing apparatus is configured to
   define a region of interest (109) around a position (x,y) of the touch object on the touch surface,
   determine said difference for light passing through the region of interest, between respective pairs of emitters and detectors,
   determine an averaged pressure based on the determined differences for the pairs of emitters and detectors.
Example 10. Touch sensing apparatus according to any of examples 1 - 9, wherein the touch sensing apparatus is configured to
   determine a first estimate of a pressure at a touch position (x,y) on the touch surface,
   calculate a detection light signal difference based on the first estimate,
   solve the pressure by iteratively minimizing a differential between a measured value of the difference in the received detection light and the calculated detection light signal difference.
Example 11. Touch sensing apparatus according to example 10, wherein the touch sensing apparatus is configured to
   determine a deflection of the panel along the normal resulting from the first estimate of the pressure at the touch position,
   calculate the detection light signal difference resulting from the deflection.
Example 12. Touch sensing apparatus according to example 10 or 11, wherein the touch sensing apparatus is configured to
   determine the detection light signal difference based on a plurality of reference detection light signal differences resulting from a respective plurality of reference pressures on the touch surface.
Example 13. Touch sensing apparatus according to any of examples 1 - 12, wherein the touch sensing apparatus is configured to output a control signal to
   display a visual output depending on the pressure, and/or
   control the touch sensing apparatus based on the pressure.
Example 14. Touch sensing apparatus according to any of examples 1 - 13, wherein the touch sensing apparatus is configured to determine an amount of deflection of the panel along the normal direction based on the pressure.
Example 15. Touch sensing apparatus according to any of examples 1 - 14, wherein the touch sensing apparatus is configured to determine a vibration amplitude and/or a vibration frequency of the panel based on a determined variation of the pressure over time.
Example 16. Touch sensing apparatus according to any of examples 1 - 15, wherein the emitters are arranged to emit light above the touch surface, and wherein the deflection of the panel determines an amount and/or direction of reflection of the light on the touch surface and the difference in the received detection light.
Example 17. A method (200) for detecting touch pressure in a touch sensing apparatus (100) comprising a panel (101) that defines a touch surface (102), the panel having a perimeter (103), the method comprising
   emitting (201) light across the panel with a plurality of emitters (104) arranged along the perimeter,
   receiving (202) at least part of said light as detection light with a plurality of detectors (105) arranged along the perimeter,
   determining (203), as a touch object deflects the panel along a normal (108) of the touch surface, a difference in the received detection light between deflection of the panel from a first position (p₁) to a second position (p₂) along the normal (108), and
   determining (204) a pressure of the touch object against the touch surface based on said difference.
Example 18. A computer program product comprising instructions which, when the program is executed by a computer, cause the computer to carry out the steps of the method according to example 17.

## Claims

1. A touch sensing apparatus (100) for detecting touch pressure, the touch sensing apparatus comprising:
a panel (101) defining a touch surface (102), the panel having a perimeter (103),
a plurality of emitters (104) arranged along the perimeter, wherein the emitters emit light (106) across the panel,
a plurality of detectors (105) arranged along the perimeter, whereby the detectors are arranged to receive at least part of said light as detection light (106'), to determine a position (x, y) at which a touch object (107) touches the touch surface based on attenuation of the light emitted across the panel by the touch object,
wherein the touch sensing apparatus is configured to:
determine, as the touch object (107) deflects the panel, a difference in the received detection light between deflection of the panel from a first position (p₁) to a second position (p₂) along a normal (108) of the touch surface, wherein the light emitted by the emitters is reflected by the touch surface when the panel is in the first position and the second position, and
determine a pressure of the touch object against the touch surface based on said difference;
wherein the light used for determining the pressure on the touch surface is light passing through a region of interest of the touch surface, the region of interest being a region (109) defined around the position (x, y) of the touch object on the touch surface.

2. The touch sensing apparatus according to claim 1, wherein the touch sensing apparatus is configured to continuously determine the pressure based on the difference detected in the received detection light as the panel deflects.

3. The touch sensing apparatus according to claim 1 or claim 2, wherein the touch sensing apparatus is configured to determine the pressure based on a difference between the received detection light and a reference background signal of detection light when the panel deflects.

4. The touch sensing apparatus according to claim 1 or claim 2, wherein the pressure is determined to be proportional to said difference.

5. The touch sensing apparatus according to claim 1 or claim 2, wherein the touch sensing apparatus is configured to
define a region of interest (109) around the position (x, y) of the touch object on the touch surface,
determine the difference in light passing through the region of interest between respective pairs of emitters and detectors,
determine an average pressure based on the determined differences for the pairs of emitters and detectors.

6. The touch sensing apparatus according to claim 1 or claim 2, wherein the touch sensing apparatus is configured to
determine a first estimate of the pressure at the position (x, y) on the touch surface, calculate a difference in detection light signal based on the first estimate,
solve for the pressure by iteratively minimizing a difference between a measured difference in the received detection light and the calculated difference in detection light signal.

7. The touch sensing apparatus according to claim 6, wherein the touch sensing apparatus is configured to
determine a deflection of the panel along the normal caused by the first estimate of the pressure at the touch position,
calculate the difference in detection light signal caused by said deflection.

8. The touch sensing apparatus according to claim 6, wherein the touch sensing apparatus is configured to
determine the difference in detection light signal based on a plurality of reference differences in detection light signal caused by a corresponding plurality of reference pressures on the touch surface.

9. The touch sensing apparatus according to claim 1 or claim 2, wherein the touch sensing apparatus is configured to determine a vibration amplitude and/or a vibration frequency of the panel based on a determined change in the pressure over time.

10. The touch sensing apparatus according to claim 1 or claim 2, wherein the emitters are arranged to emit light above the touch surface, and wherein the deflection of the panel determines an amount and/or a direction of reflection of the light on the touch surface and determines the difference in the received detection light.

11. The touch sensing apparatus according to claim 1 or claim 2, wherein, when the touch object applies pressure on the touch surface, the deflection of the panel from the first position (p₁) to the second position (p₂) increases a number of reflection paths at the touch surface, thereby increasing an amount of detection light received at the detectors.

12. A method (200) for detecting touch pressure in a touch sensing apparatus (100), the touch sensing apparatus comprising a panel (101) defining a touch surface (102), the panel having a perimeter (103), the method comprising:
emitting (201) light across the panel by a plurality of emitters (104) arranged along the perimeter,
receiving (202) at least part of said light as detection light by a plurality of detectors (105) arranged along the perimeter, to determine a position (x, y) at which a touch object (107) touches the touch surface based on attenuation of the light emitted across the panel by the touch object,
determining (203), as the touch object deflects the panel along a normal (108) of the touch surface, a difference in the received detection light between deflection of the panel from a first position (p₁) to a second position (p₂) along the normal (108), wherein the light emitted by the emitters is reflected by the touch surface when the panel is in the first position and the second position, and
determining (204) a pressure of the touch object against the touch surface based on said difference;
wherein the light used for determining the pressure on the touch surface is light passing through a region of interest of the touch surface, the region of interest being a region (109) defined around the position (x, y) of the touch object on the touch surface.
